# EUROPÄISCHE PATENTANMELDUNG

(11) **EP 3 214 266 A1**
(43) Veröffentlichungstag der Anmeldung: **06.09.2017**
(21) Anmeldenummer: 16158055.0
(22) Anmeldetag: 01.03.2016
(51) Int. Cl.: F01D 5/08, F01D 11/00, F01D 25/12, F02C 6/08

(54) **ROTOR EINER GASTURBINE MIT KÜHLLUFTFÜHRUNG**

(71) Anmelder: Siemens Aktiengesellschaft, 80333 München (DE)
(72) Erfinder: Schneider, Oliver, 46487 Wesel (DE); Wagner, Michael, 46539 Dinslaken (DE)

(57) **Zusammenfassung**

Die Erfindung betrifft einen Rotor (01) zur Verwendung in einer Gasturbine mit mehreren Verdichtersegmenten (21), mehreren Mittelsegmenten (31) und mehreren Turbinensegmenten (41), wobei die Verdichtersegemente (21) sowie die Turbinensegmente (41) entsprechend Schaufelkränze (22, 42) aufweisen. Zur verbesserten Kühlung der Mittelsegemente (31) und der Turbinenkränze (42) werden die Segmente (21a, 31, 41a) durchziehende Kühlluftkanäle (25a, 35, 45a) eingesetzt.

## Beschreibung

Die Erfindung betrifft einen Rotor einer Gasturbine mit einem Verdichterabschnitt, einer Mittelsektion sowie einem Turbinenabschnitt, wobei vom Verdichterabschnitt Kühlluft durch die Mittelsektion zum Turbinenabschnitt befördert werden kann.

Aus dem Stand der Technik sind verschiedene Ausführungsformen von Rotoren von Gasturbinen mit Kühlluftführungen bekannt. Ziel der Kühlluftführung ist es hierbei, jeweils den Turbinenschaufeln Kühlluft zuführen zu können. Ein Ausführungsbeispiel für eine derartige Kühlluftführung im Rotor ist aus der Veröffentlichung EP 1 725 741 B1 bekannt. Hierbei ist vorgesehen, dass von der vorletzten Verdichterstufe Kühlluft abgeführt und durch die letzte Verdichterstufe in einem Spalt zum mittig angeordneten Zuganker geleitet wird. Die Mittelsektion ist in bekannter Weise in Art einer Hohlwelle ausgeführt, so dass die Kühlluft entlang des Zugankers zum Turbinenabschnitt gefördert werden kann. Zwischen der ersten und zweiten Turbinenscheibe befindet sich im Inneren dem Zuganker zuweisend ein Spalt, so dass die Kühlluft zwischen den Turbinenscheiben und folgend durch einen Kühlluftkanal in der zweiten Turbinenscheibe dem zweiten Schaufelkranz zugeführt werden kann. Somit kann eine effektive Kühlung der Turbinenschaufeln erfolgen.

Weiterhin ist es bekannt, die Mittelsektion mit Öffnungen auf ihrem Außenumfang zu versehen, so dass Verdichterendluft in die Mittelsektion eindringen kann. Durch Durchbrüche innerhalb der Mittelsektion kann sodann die Verdichterendluft durch die Mittelsektion hindurch geführt werden und zur Kühlung der Turbinenschaufeln des ersten Turbinenschaufelkranzes eingesetzt werden.

Wenngleich mit den bekannten Lösungen eine vorteilhafte Kühlung der Turbinenschaufeln der ersten beiden Turbinenschaufelkränze möglich ist, so treten dennoch aufgrund der bereits hohen Temperaturen in der Verdichterendluft hohe thermische Belastungen sowohl in der Mittelsektion als auch im ersten Turbinenabschnitt auf.

Daher ist es Aufgabe der vorliegenden Erfindung, eine verbesserte Kühlung im Bereich der Mittelsektion sowie für die Turbinenschaufeln zur Verfügung zu stellen.

Die gestellte Aufgabe wird durch eine erfindungsgemäße Ausführungsform nach der Lehre des Anspruchs 1 gelöst. Eine Gasturbine mit erfindungsgemäßem Rotor ist im Anspruch 13 angegeben.

Vorteilhafte Ausführungsformen sind Gegenstand der Unteransprüche.

Der gattungsgemäße Rotor dient zunächst einmal zur Verwendung in einer Gasturbine. Hierbei umfasst der Rotor einen Verdichterabschnitt, eine Mittelsektion sowie einen Turbinenabschnitt. Der Verdichterabschnitt kann hierbei ein einzelnes Verdichtersegment umfassen, wobei in aller Regel mehrere aufeinanderfolgende Verdichtersegmente eingesetzt werden. An den Verdichtersegmenten sind mehrere hintereinander folgende Verdichterschaufelkränze angeordnet. Diesbezüglich ist es zunächst unerheblich, ob jedes einzelne Verdichtersegment einen einzelnen Verdichterschaufelkranz aufweist oder ob mehrere Verdichterschaufelkränze auf einem Verdichtersegment angeordnet sind oder ob weiterhin Verdichtersegmente ohne einen Schaufelkranz vorhanden sind. Zumindest sind mehrere nacheinander folgende Verdichterschaufelkränze erforderlich. Gleichfalls kann die Mittelsektion von einem einzelnen Mittelsegment gebildet werden. Dem gegenüber werden jedoch in aller Regel zur Realisierung der Mittelsektion mehrere aufeinander folgende Mittelsegmente eingesetzt. Die Mittelsegmente weisen hierbei eine Außenhülle auf, welche im Betrieb der Gasturbine von der Verdichterendluft umgeben ist. Der Turbinenabschnitt kann gleichfalls von einem einzelnen Turbinensegment gebildet sein. Jedoch werden ebenso in aller Regel mehrere Turbinensegmente eingesetzt. An diesen sind mehrere aufeinander folgende Turbinenschaufelkränze angeordnet. Gleichfalls wie beim Verdichterabschnitt, kann ebenso beim Turbinenabschnitt vorgesehen sein, dass an jedem einzelnen Turbinensegment ein einzelner Turbinenschaufelkranz angeordnet ist. Alternativ ist es jedoch ebenso möglich, an einem Turbinensegment zwei oder mehrere Turbinenschaufelkränze anzuordnen sowie es ebenso möglich ist, ein Turbinensegment ohne Schaufelkranz vorzusehen. Weiterhin weist der gattungsgemäße Rotor zumindest einen Zuganker auf, welcher sich entlang des Rotors erstreckt und die Segmente miteinander verbindet. Hierbei ist es zunächst unerheblich, wie der Zuganker angeordnet wird. Weiterhin ist es zunächst unerheblich, ob ein oder mehrere Zuganker eingesetzt werden. In aller Regel wird jedoch ein zentraler Zuganker eingesetzt. Es ist jedoch ebenso denkbar, um die Drehachse verteilt mehrere Zuganker einzusetzen. Erforderlich ist es weiterhin, dass von den Turbinensegmenten ein Drehmoment über die Mittelsegmente zu den Verdichtersegmenten übertragen werden kann.

Zur Verbesserung der Kühlung im Rotor werden erfindungsgemäß nunmehr erste Kühlluftkanäle eingesetzt, welche sich vom Verdichterabschnitt durch die Mittelsektion bis zum Turbinenabschnitt erstrecken. Hierbei weist zumindest das letzte Verdichtersegment sowie die Mittelsegmente sowie zumindest das erste Turbinensegment miteinander korrespondierende erste Kühlluftkanäle auf. Somit kann erste Kühlluft aus einem dem letzten Verdichterschaufelkranz vorhergehenden Bereich entnommen, durch den ersten Kühlluftkanal im letzten Verdichtersegment, durch die Mittelsegmente und durch das erste Turbinensegment zum zweiten oder einem nachfolgenden Turbinenschaufelkranz befördert werden. Die Entnahme der Kühlluft kann sowohl in einem Bereich zwischen zwei Verdichterschaufelkränze, bspw. zwischen dem vorletzten und dem letzten Verdichterschaufelkranz, als auch im Bereich des vorletzten oder einem vorhergehenden Verdichterschaufelkranz erfolgen. Relevant ist vor allem, dass die erste Kühlluft eine gegenüber der Verdichterendluft geringere Temperatur aufweist.

Durch die Erweiterung der Mittelsegmente um erste Kühlluftkanäle, welche sich vom zumindest vorletzten Verdichterschaufelkranz bis in den zweiten Turbinenschaufelkranz erstrecken, wird eine deutlich verbesserte Kühlung sowohl der Mittelsektion als auch der Turbinenschaufeln ermöglicht. Dadurch können die Temperaturen insbesondere in der Mittelsektion insoweit reduziert werden, dass eine größere Freiheit hinsichtlich der Materialwahl zur Realisierung der Mittelsegmente offensteht.

In besonders vorteilhafter Weise werden hierzu in jeder Sektion mehrere erste Kühlluftkanäle eingesetzt, welche auf dem Umfang verteilt angeordnet werden. Hierbei kann sowohl vorgesehen sein, dass im letzten Verdichtersegment sowie in den Mittelsegmenten sowie in dem ersten Turbinensegment erste Kühlluftkanäle in gleicher Anzahl verteilt auf dem Umfang vorhanden sind, so dass die Kühlluft von dem jeweiligen Kühlluftkanal unmittelbar von dem einen Segment in das nächste Segment weiterströmen kann. Alternativ kann ebenso vorgesehen sein, dass die Anzahl der ersten Kühlluftkanäle zwischen den einzelnen Segmenten variiert, wobei weiterhin in jedem der Segmente eine Mehrzahl erster Kühlluftkanäle am Umfang verteilt eingesetzt wird.

Weiterhin ist es zur Gewährleistung der Effektivität der Kühlung durch Einsatz der ersten Kühlluftkanäle vorteilhaft, wenn zumindest das letzte Verdichtersegment zum folgenden Mittelsegment sowie - sofern mehrere vorhanden - die Mittelsegmente zueinander, sowie das letzte Mittelsegment zum folgenden Segment zwischen der Außenhülle und den ersten Kühlluftkanälen stirnseitig angeordnete äußere Dichtmittel aufweisen.

Wie die Dichtung realisiert wird, ist zunächst unerheblich, wobei nicht zwingend eine absolut dichte Verbindung erforderlich ist. Vielmehr ist es hinreichend, wenn es aufgrund der vorhandenen Druckunterschiede zwischen dem Druck in den ersten Kühlluftkanälen und dem Druck außerhalb der Außenhülle, d.h. dem Verdichterenddruck, sowie zwischen dem Druck in den ersten Kühlluftkanälen und dem Druck innerhalb der Innenhülle lediglich zu einer hinsichtlich der Effektivität der Kühlung vernachlässigbaren Querströmung kommt. Dabei können die Dichtmittel bspw. von einer Spaltdichtung und/oder einer Nut-Feder-Verbindung und/oder von einer Labyrinthdichtung gebildet sein.

Weiterhin weisen die Mittelsegmente in besonders vorteilhafter Weise eine Innenhülle auf, so dass die Mittelsektion eine Art Hohlwelle bildet.

Eine weitere Verbesserung bei der Kühlung der Turbinenschaufeln wird erzielt, wenn zusätzlich weitere Kühlluft von den Verdichtersegmenten zu den Turbinensegmenten befördert werden kann, wobei diese getrennt von der in den ersten Kühlluftkanälen strömenden ersten Kühlluft im Rotor geführt wird. Dieses kann in einfacher Weise erfolgen, indem Kühlluft von einem vorhergehenden Verdichterschaufelkranz, d.h. aus einem der Abnahme der ersten Kühlluft vorhergehenden Bereich, in die Mitte des Rotors geleitet und sodann zumindest abschnittsweise innerhalb der Innenhülle der Mittelsegmente zu den Turbinensegmenten strömen kann, um dort den Turbinenschaufeln zugeführt zu werden.

Analog zur Anordnung der äußeren Dichtmittel zwischen Außenhülle und ersten Kühlluftkanälen ist es vorteilhaft, wenn zwischen den Segmenten stirnseitig angeordnete innere Dichtmittel vorhanden sind, welche insofern zwischen den ersten Kühlluftkanälen und der Innenhülle der Mittelsegmente anzuordnen sind. Insofern kann hinsichtlich deren vorteilhafter Realisierung auf die vorherigen Ausführungen zu den äußeren Dichtmitteln verwiesen werden.

Zur Realisierung der Drehmomentübertragung vom Turbinenabschnitt über die Mittelsektion zum Verdichterabschnitt ist es weiterhin besonders vorteilhaft, wenn die Verdichtersegmente und/oder die Mittelsegmente und/oder die Turbinensegmente stirnseitig angeordnete Eingriffsmittel zur Drehmomentübertragung aufweisen. Wie die Eingriffsmittel ausgeführt sind, ist hierbei zunächst unerheblich, wobei in aller Regel eine Hirth-Verzahnung eingesetzt wird.

Dabei ist es vorteilhaft, wenn die äußeren Dichtmittel zur Abgrenzung der ersten Kühlluft von der Verdichterendluft zwischen der Außenhülle und den Eingriffsmitteln angeordnet werden.

Zur Bewirkung einer vorteilhaften Kühlung der Mittelsektion unter Einsatz der ersten Kühlluftkanäle ist es weiterhin besonders vorteilhaft, wenn die ersten Kühlluftkanäle in den Mittelsegmenten jeweils zumindest abschnittsweise in deren äußeren Viertel bezogen auf den Radius der Außenhülle verlaufen. Besonders vorteilhaft ist es hierbei, wenn die ersten Kühlluftkanäle in den Mittelsegmenten jeweils zumindest abschnittsweise in deren äußeren Viertel bezogen auf den Abstand von der Außenhülle zur Innenhülle verlaufen. Bei einem Radius der Außenhülle um die Drehachse von R und einem Radius der Innenhülle um die Drehachse von r beträgt zumindest abschnittsweise der Abstand A der ersten Kühlluftkanäle zur Drehachse: A=1/4·(3·R), in besonders vorteilhafter Weise A=1/4·(3·R+r). Besonders vorteilhaft ist es hierbei, wenn die ersten Kühlluftkanäle vollständig im äußeren Viertel verlaufen, so dass eine besonders vorteilhafte Kühlung der Mittelsektion gegenüber der höheren Temperatur außerhalb der Außenhülle möglich wird.

Darüber hinausgehend ist es weiterhin besonders vorteilhaft, wenn die Kühlluftkanäle der Mittelsegmente im Bereich der Eingriffsmittel beginnen bzw. enden. Hierbei kann zum einen vorgesehen sein, dass die ersten Kühlluftkanäle in den ersten Mittelsegmenten einen Abstand zu den Eingriffsmitteln aufweisen, welcher geringer ist als die radiale Breite der Eingriffsmittel. Besonders vorteilhaft ist hier eine unmittelbar angrenzende Anordnung der ersten Kühlluftkanäle an die Eingriffsmittel. Alternativ kann auch vorgesehen sein, dass die Öffnungen der ersten Kühlluftkanäle zumindest abschnittsweise unmittelbar bei den Eingriffsmitteln angeordnet sind. Insofern schneiden die ersten Kühlluftkanäle zumindest abschnittsweise die Eingriffsmittel, wobei ebenso vorgesehen sein kann, dass die ersten Kühlluftkanäle innerhalb der Eingriffsmittel beginnen bzw. enden. Alternativ kann auch vorgesehen sein, dass die stirnseitig angeordneten Öffnungen der Kühlluftkanäle zwischen äußeren Eingriffsmitteln und inneren Eingriffsmitteln angeordnet sind.

Durch diese vorteilhafte Anordnung der Kühlluftkanäle in unmittelbarer Nähe der Eingriffsmittel kann eine effektive Kühlung der Mittelsegmente ebenso im Bereich der Eingriffsmittel sichergestellt werden.

Insbesondere die Anordnung der ersten Kühlluftkanäle im äußeren Viertel der Mittelsegmente eröffnet die vorteilhafte Möglichkeit, in den Mittelsegmenten zweite Kühlluftkanäle vorzusehen. Somit kann in besonders vorteilhafter Weise zweite Kühlluft getrennt von der ersten Kühlluft vom Verdichterabschnitt durch die Mittelsegmente zum Turbinenabschnitt gefördert werden. Dabei ist es vorteilhaft, wenn analog zweite Dichtmittel stirnseitig an den Mittelsegmenten eingesetzt werden, welche hierbei zwischen den ersten Kühlluftkanälen und den zweiten Kühlluftkanälen anzuordnen sind.

Weiterhin ist es möglich, analog der bekannten Ausführung eine Öffnung in der Außenhülle vorzusehen, durch die Verdichterendluft in ein Mittelsegment einströmen kann. Hierbei ist diese Öffnung mit dritten Kühlluftkanälen zu verbinden, welche durch zumindest das letzte Mittelsegment zum ersten Turbinensegment führen.

Vorteilhaft ist es weiterhin, wenn die Außenhülle zumindest eines Mittelsegmentes von einer Wärmedämmschicht gebildet wird. Hierbei kann es sich in besonders vorteilhafter Weise um eine keramische Wärmedämmschicht handeln. Durch die Verwendung einer Wärmedämmschicht wird die Aufheizung des Mittelsegmentes durch die höhere, außerhalb der Außenhülle vorliegende Temperatur der Verdichterendluft reduziert, so dass die Kühlung des Mittelsegmentes durch die ersten Kühlluftkanäle besonders effektiv wirksam sein kann. Dabei ist es besonders vorteilhaft, wenn alle Mittelsegmente mit einer entsprechenden Wärmedämmschicht versehen werden.

Weiterhin ist es besonders vorteilhaft, wenn die Außenhüllen aller Mittelsegmente im Wesentlichen geschlossen sind und somit ein Eindringen von Verdichterendluft in die Mittelsegmente im Wesentlichen verhindert ist. In Kombination mit dem Einsatz einer Wärmedämmschicht kann somit vorteilhaft die Temperatur in den Mittelsegmenten gegenüber den bekannten Lösungen im Stand der Technik reduziert werden.

Der Einsatz eines erfindungsgemäßen Rotors führt nunmehr zur Bildung einer verbesserten erfindungsgemäßen Gasturbine, welche einen Verdichter, eine Brennkammer und eine Turbine aufweist, durch die Verwendung eines erfindungsgemäßen Rotors oder einer hierzu vorteilhaften Ausführungsform.

Dabei ist es besonders vorteilhaft, wenn der Rotor derart ausgeführt wird, dass in der Gasturbine die aus dem Verdichter austrendende Verdichterendluft vollständig außerhalb der Mittelsegmente zum Brenner und/oder Turbine geführt werden kann.

In den nachfolgenden Figuren werden zwei beispielhafte Ausführungsformen für einen erfindungsgemäßen Rotor schematisch skizziert.

Es zeigen:
- Figur 1: ein erstes Ausführungsbeispiel eines Rotors mit Verdichtersegmenten und Turbinensegmenten, an denen jeweils ein Schaufelkranz angeordnet ist;
- Figur 2: ein weiteres Ausführungsbeispiel für einen Rotor, bei dem zwei Schaufelkränze auf jeweils einem Schaufelsegment angeordnet sind.

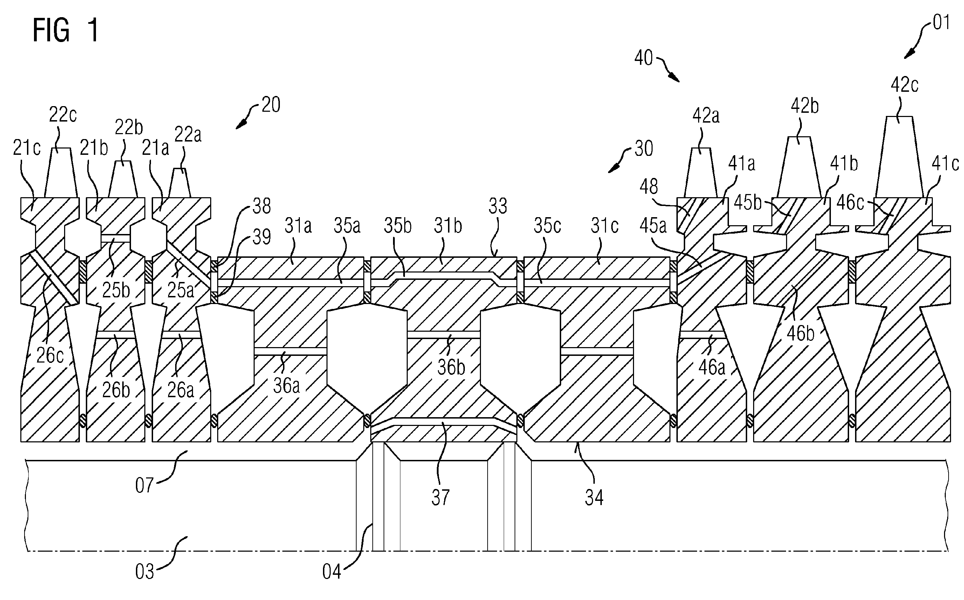

In der Figur 1 wird ein erstes Ausführungsbeispiel für einen erfindungsgemäßen Rotor 01 schematisch skizziert. Zu erkennen ist zunächst einmal links angeordnet der Verdichterabschnitt 20, welcher 20 in diesem Fall gebildet wird durch drei Verdichtersegmente 21a, 21b und 21c, wobei jeder der Verdichtersegmente 21 jeweils einen Verdichterschaufelkranz 22a, 22b bzw. 22c aufweist. Nachfolgend nach dem Verdichterabschnitt 20 befindet sich die Mittelsektion 30, welche 30 ebenso von mehreren Mittelsegmenten 31a, 31b und 31c gebildet wird. Im Anschluss an die Mittelsektion 30 folgt der Turbinenabschnitt 40, welcher 40 in diesem schematischen Beispiel ebenfalls drei Turbinensegmente 41a, 41b, 41c umfasst. Hierbei weist ebenso jedes Turbinensegment 41 einen Turbinenschaufelkranz 42a, 42b bzw. 42c auf. Zur Verbindung der einzelnen Segmente 21, 31 und 41 zueinander wird ein mittig angeordneter Zuganker 03 eingesetzt. Dieser 03 weist im mittleren Bereich zwei Abstützungen 04 zur radialen Verbindung mit der Mittelsektion auf 30. Zur Kühlung der Turbinenschaufeln durch Einsatz von Kühlluft vom Verdichterabschnitt 20 wird einerseits in bekannter Weise weitere Kühlluft entlang einer Kühlluftführung 07 zwischen den Segmenten 21, 31, 41 einerseits und dem Zuganker 03 anderseits innerhalb der Innenhülle 34 der Mittelsektion 30 geführt. Zur Überbrückung der Abstützung 04 am Zuganker 03 befindet sich ein dritter Kühlluftkanal 37 im zweiten Mittelsegment 31b nahe der Innenhülle, so dass die weitere Kühlluft die Abstützung 04 umströmen kann.

Zur verbesserten Kühlung sowohl der Mittelsektion 30 als auch der Turbinenschaufeln werden nunmehr in den Segmenten 21, 31, 41 Kühlluftkanäle 25, 35 und 45 eingesetzt, durch die 25, 35, 45 erste Kühlluft vom Verdichterabschnitt 20 durch die Mittelsektion 30 zum Turbinenabschnitt 40 strömen kann. Erste Kühlluft kann hierbei aus einem Bereich vor dem vorletzten Verdichterschaufelkranz 22b entnommen und durch im vorletzten Verdichtersegment 21b vorhandene erste Kühlluftkanäle 25b und durch im letzten Verdichtersegment 21a vorhandene erste Kühlluftkanäle 25a zur Mittelsektion strömen. Den Kühlluftkanälen 26b, 25a im Verdichterabschnitt folgend befinden sich in den Mittelsegmenten 31 ebenso erste Kühlluftkanäle 35a, 35b und 35c durch die 35 die erste Kühlluft durch die Mittelsektion 30 zum Turbinenabschnitt 40 geführt werden kann. Dazu weist das erste Turbinensegment 41a ebenso einen ersten Kühlluftkanal 45a auf, so dass erste Kühlluft dem zweiten Turbinensegment 41b und somit dem zweiten Turbinenschaufelkranz 42b zugeführt werden kann.

Darüber hinaus weist dieses Ausführungsbeispiel sämtliche Segmente durchziehende zweite Kühlluftkanäle 26, 36 und 46 auf, so dass zweite Kühlluft aus einem Bereich vor dem vorvorletzten Turbinenschaufelkranz 22c getrennt vom ersten Kühlluftkanal 25, 35, 45 und getrennt von der weiteren Kühlluft innerhalb der Innenhülle 34 durch die Mittelsegmente 31 bis zum dritten Turbinensegment 41c und dem dritten Turbinenschaufelkranz 42c geführt werden kann.

Zu erkennen ist weiterhin die Anordnung von äußeren Eingriffsmitteln 38 sowie inneren Eingriffsmitteln 39, wobei sich die Öffnungen der ersten Kühlluftkanäle 35 in den Mittelsegmenten 31 zwischen den äußeren Eingriffsmitteln 38 und den inneren Eingriffsmitteln 39 befinden. Darüber hinaus ist zu erkennen, dass im ersten Turbinensegment 41a ein dritter Kühlluftkanal 48 vorgesehen ist, so dass eine Kühlung des ersten Turbinenschaufelkranzes 42 mittels Verdichterendluft möglich wird.

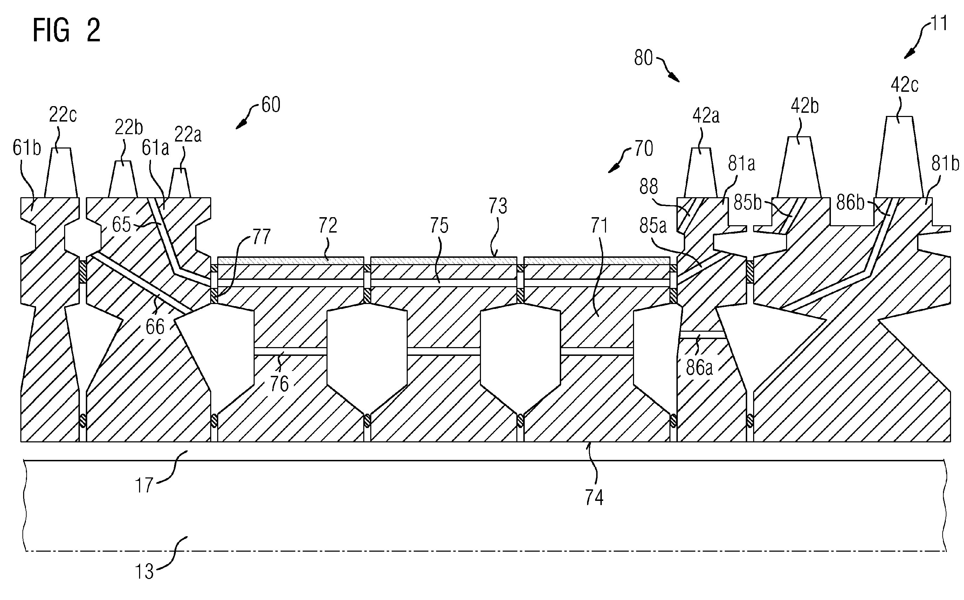

Die Figur 2 skizziert ein weiteres Ausführungsbeispiel für einen erfindungsgemäßen Rotor 11, wobei im Unterschied zur vorherigen Ausführungsform das letzte Verdichtersegment 61a in beispielhafter Weise den letzten Verdichterschaufelkranz 22a sowie den vorletzten Verdichterschaufelkranz 22b trägt. In vergleichbarer Weise wird in diesem Ausführungsbeispiel ein Turbinensegment 81b eingesetzt, welches 81b den zweiten Turbinenschaufelkranz 42b sowie den dritten Turbinenschaufelkranz 42c trägt. Im Unterschied zur vorherigen Ausführungsform ist vorgesehen, dass im letzten Verdichtersegment 61a ein erster Kühlluftkanal 65 im Bereich zwischen dem letzten Verdichterschaufelkranz 22a und dem vorletzten Verdichterschaufelkranz 22b endet. Weiterhin weist das letzte Verdichtersegment 61a einen zweiten Kühlluftkanal 66 auf, welcher 66 die Zufuhr von Kühlluft von einem Bereich zwischen dem vorvorletzten Verdichterschaufelkranz 22c und dem vorletzten Verdichterschaufelkranz 22b ermöglicht. Die Zufuhr der ersten Kühlluft durch die ersten Kühlluftkanäle 65, 75, 85 erfolgt analog dem vorherigen Beispiel durch die Mittelsektion 70 durch erste Kühlluftkanäle 75. Diese 75 befinden sich im Gegensatz zum vorherigen Ausführungsbeispiel in einem Bereich zwischen den Eingriffsmitteln 77 und der Außenhülle 73 der Mittelsegmente 71. Der weitere Verlauf der ersten Kühlluft durch den Turbinenabschnitt 80 durch das erste Turbinensegment 81a sowie das zweite Turbinensegment 81b erfolgt analog dem vorherigen Beispiel durch die ersten Kühlluftkanäle 85a bzw. 85b. Die Zufuhr der zweiten Kühlluft erfolgt analog vorherigem Beispiel durch die zweiten Kühlluftkanäle 66 im letzten Verdichtersegment 61a und durch die zweiten Kühlluftkanäle 76 in den Mittelsegmenten 71 und dem zweiten Kühlluftkanal 86a im ersten Turbinensegment 81a sowie im Folgenden durch den zweiten Kühlluftkanal 86b im zweiten Turbinensegment 81b.

Weiterhin wird in diesem Ausführungsbeispiel die Verwendung einer Wärmedämmschicht 72 an der Außenhülle 73 der Mittelsegmente 71 skizziert. Somit kann eine besonders effektive Kühlung der Mittelsegmente 71 durch die erste Kühlluft erfolgen.

## Patentansprüche

1. Rotor (01,11) zur Verwendung in einer Gasturbine umfassend
- ein oder mehrere Verdichtersegmente (21,61) mit daran angeordneten Verdichterschaufelkränzen (22) und
- ein oder mehrere Mittelsegmente (31,71), welche (31,71) eine Außenhülle (33,73) aufweisen, und
- ein oder mehrere Turbinensegmente (41,81) mit daran angeordneten Turbinenschaufelkränzen (42) und
- zumindest einen Zuganker (03,13) zur Verbindung der Segmente (21,31,41,61,71,81),
wobei ein Drehmoment von den Turbinensegmenten (41,81) über die Mittelsegmente (31,71) zu den Verdichtersegmenten (21,61) übertragen werden kann,
**dadurch gekennzeichnet,**
**dass** im letzten Verdichtersegment (21a, 81a) und in den Mittelsegmenten (31,71) und im ersten Turbinensegment (41a,81a) miteinander korrespondierende erste Kühlluftkanäle (25,35,45, 65,75,85) vorhanden sind, durch die (25,35,45,65,75,85) erste Kühlluft aus einem zumindest dem letzten Verdichterschaufelkranz (22a) vorhergehenden Bereich zum zweiten oder einem nachfolgenden Turbinenschaufelkranz (42b,42c) gefördert werden kann.

2. Rotor (01,11) nach Anspruch 1,
**dadurch gekennzeichnet,**
**dass** mehrere erste Kühlluftkanäle (25,35,45,65,75,85) auf den Umfang verteilt, vorhanden sind.

3. Rotor (01,11) nach Anspruch 1 oder 2,
**dadurch gekennzeichnet,**
**dass** das letzte Verdichtersegment (21a,61a) zum folgenden Mittelsegment (31a,71), und insbesondere die Mittelsegmente (31a,31b,31c,71) zueinander, und das letzte Mittelsegment (31c,71) zum folgenden Turbinensegment (41a) zwischen der Außenhülle (33,73) und den ersten Kühlluftkanälen (35,75) stirnseitig angeordnete äußere Dichtmittel aufweisen, wobei insbesondere die Dichtmittel von einer Spaltdichtung und/oder Nut-Feder-Verbindung und/oder von einer Labyrinthdichtung gebildet werden.

4. Rotor (01,11) nach einem der Ansprüche 1 bis 3,
**dadurch gekennzeichnet,**
**dass** die Mittelsegmente (31,71) jeweils eine Innenhülle (34,74) aufweisen, innerhalb denen (34,74) zumindest abschnittsweise weitere Kühlluft von den Verdichtersegmenten (21,81) zu den Turbinensegmenten (41,81) befördert werden kann.

5. Rotor (01,11) nach Anspruch 4,
**dadurch gekennzeichnet,**
**dass** das letzte Verdichtersegment (21a,61a) zum folgenden Mittelsegment (31a,71), und insbesondere die Mittelsegmente (31a,31b,31c,71) zueinander, und das letzte Mittelsegment (31c,71) zum folgenden Turbinensegment (41a) zwischen den ersten Kühlluftkanälen (35,75) und der Innenhülle (34,74) stirnseitig angeordnete innere Dichtmittel aufweisen, wobei insbesondere die Dichtmittel von einer Spaltdichtung und/oder Nut-Feder-Verbindung und/oder von einer Labyrinthdichtung gebildet werden.

6. Rotor (01,11) nach einem der Ansprüche 1 bis 5,
**dadurch gekennzeichnet,**
**dass** die Verdichtersegmente (21,61) und/oder die Mittelsegmente (31,71) und/oder die Turbinensegmente (41,81) stirnseitig angeordnete Eingriffsmittel (38,39,77) zur Drehmomentübertragung aufweisen.

7. Rotor (01,11) nach Anspruch 6,
**dadurch gekennzeichnet,**
**dass** die äußeren Dichtmittel zwischen der Außenhülle (33,73) und den Eingriffsmitteln (38,39,77) angeordnet sind.

8. Rotor (01,11) nach einem der Ansprüche 1 bis 7,
**dadurch gekennzeichnet,**
**dass** die ersten Kühlluftkanäle (35,75) in den Mittelsegmenten (31,71) zumindest abschnittsweise, insbesondere vollständig, in deren (31,71) äußerem Viertel bezogen auf den Radius der Außenhülle (33,73), insbesondere bezogen auf den Abstand von der Außenhülle (33,73) zur Innenhülle (34,74) verlaufen.

9. Rotor (01,11) nach einem der Ansprüche 1 bis 8,
**dadurch gekennzeichnet,**
**dass** die beidseitigen Öffnungen der ersten Kühlluftkanäle (35,75) in den Mittelsegmenten (31,71)
- in einem Abstand zu den Eingriffsmitteln (77) geringer als die radiale Breite der Eingriffsmittel (77), insbesondere unmittelbar angrenzend an die Eingriffsmittel (77), oder
- zumindest abschnittsweise die Eingriffsmittel schneidend oder
- zwischen beidseitig angeordneten Eingriffsmitteln (38,39) angeordnet sind.

10. Rotor (01,11) nach einem der Ansprüche 4 bis 9,
**dadurch gekennzeichnet,**
**dass** in den Mittelsegmenten (31,71) zwischen den ersten Kühlluftkanälen (35,75) und der Innenhülle (34,74), insbesondere im Umfang verteilte, zweite Kühlluftkanäle (76) vorhanden sind, wobei insbesondere stirnseitig zweite Dichtmittel zwischen den ersten Kühlluftkanälen (35,75) und den zweiten Kühlluftkanälen (36,76) angeordnet sind.

11. Rotor (11) nach einem der Ansprüche 1 bis 10,
**dadurch gekennzeichnet,**
**dass** die Außenhüllen (33,73) zumindest eines, insbesondere aller, Mittelsegmente (31,71) im Wesentlichen von einer, insbesondere keramischen, Wärmedämmschicht gebildet wird.

12. Rotor (01,11) nach einem der Ansprüche 1 bis 11,
**dadurch gekennzeichnet,**
**dass** im letzten Mittelsegment dritte Kühlluftkanäle vorhanden sind, welche von einer Entnahmeöffnung in der Außenhülle zum folgenden Turbinensegment führen.

13. Rotor (01,11) nach einem der Ansprüche 1 bis 11,
**dadurch gekennzeichnet,**
**dass** die Außenhüllen (34,74) aller Mittelsegmente (31,71) im Wesentlichen geschlossen sind und ein Eindringen von Verdichterendluft in die Mittelsegmente (31,71) im Wesentlichen verhindert ist.

14. Gasturbine mit einem Verdichter und einer Brennkammer und einer Turbine, **gekennzeichnet durch** einen Rotor (01) nach einem der vorhergehenden Ansprüche.

15. Gasturbine nach Anspruch 14,
**dadurch gekennzeichnet,**
**dass** die aus dem Verdichter austretende Verdichterendluft vollständig außerhalb der Mittelsegmente (31,71) zum Brenner und/oder zur Turbine geführt werden kann.
